# EUROPEAN PATENT SPECIFICATION

(11) **EP 4 691 879 B1**
(45) Date of publication and mention of the grant of the patent: **07.10.2026**
(21) Application number: 24193250.8
(22) Date of filing: 07.08.2024
(51) Int. Cl.: B60W 50/08, B60W 50/14, B60W 50/00

(54) **METHOD FOR INCREASING DRIVING AWARENESS**
VERFAHREN ZUR ERHÖHUNG DES FAHRERBEWUSSTSEINS
PROCÉDÉ D'AUGMENTATION DE LA SENSIBILITÉ À LA CONDUITE

(43) Date of publication of application: 11.02.2026
(73) Proprietor: Volvo Car Corporation, 405 31 Göteborg (SE)
(72) Inventor: TIVESTEN, Emma, 40531 Göteborg (SE); STREUBEL, Thomas, 40531 Göteborg (SE); LJUNG AUST, Mikael, 40531 Göteborg (SE)
(74) Representative: Kransell & Wennborg KB

(56) References cited:
- US-A1- 2016 068 103
- US-A1- 2018 037 235
- US-A1- 2023 143 814
- US-A1- 2024 010 277

## Description

### TECHNICAL FIELD

The present disclosure relates to a method for increasing driving awareness of a driver during an assisted drive of a vehicle, a computer program product, a data processing system, and a vehicle comprising the data processing system.

### BACKGROUND ART

Modem vehicles may be provided with assisted drive functionalities for providing driver assistance during driving. Extended durations of assisted drive may lead to a reduced driving awareness of the driver or driver of the vehicle, specifically, assisted drive for long durations may increased a risk of driver disengagement from the drive.

Reduction in driving awareness can come in different forms including mind wandering, reduced vigilance, increased drowsiness, or increased occupation with non-driving related tasks. Reduced driving awareness may lead to problems during an event that needs driver interaction. Some vehicles are provided with systems for detecting an elevated risk of driver disengagement. Examples are found in US 2016/068103 A1 and US 2018/037235 A1.
Commonly, such systems fail to take measures for increasing driving awareness of a driver in a timely manner. Consequently, no or late reaction of the driver to an event may lead to a reduction in driving safety.

### SUMMARY

The problem is at least partially solved or alleviated by the subject matter of the independent claims of the present disclosure, wherein further examples are incorporated in the dependent claims.

According to a first aspect, there is provided a method for increasing driving awareness of a driver during an assisted drive of a vehicle. The method comprises:
- obtaining driving awareness data indicative of a degree of driving awareness of the driver during the assisted drive of the vehicle;
- providing first driver request data for requesting a first driver response from the driver after obtaining the driving awareness data, the first driver response being configured to increase the degree of driving awareness of the driver; and
- providing drive response data if the first driver response is not received within a first response time, the drive response data being configured to autonomously alter at least one drive parameter of the assisted drive of the vehicle.

The method may further comprise:
- providing second driver request data for requesting a second driver response from the driver after providing a drive response, the second driver response being configured to increase the degree of driving awareness of the driver.
The method for increasing driving awareness of a driver may be provided during an assisted drive or, in other words, at least partially automated drive of a vehicle. Assisted drive may comprise "Level 2 automation" according to SAE (Society of Automotive Engineers). The driver may need to supervise the assisted drive of the vehicle and be ready to take over the driving operation partially, e.g., certain driving operations such as steering or braking, or fully at any moment. In general, any assisted drive system that may require driver intervention may be suitable for the method.

The driving awareness may define a level of awareness of the driver with respect to the driving conditions, such as environment, weather, traffic, other traffic participants and/or a state of the vehicle. Accordingly, reduced driving awareness may mean that the driver may not be in a state to react to a safety or operationally relevant event in a timely manner. The event may be a general term for a situation that requires an action of the driver of the vehicle. A traffic conjunction ahead of the vehicle, a traffic light, an accident, a sudden brake of a vehicle ahead or any other change of state may be an event. This may be, for instance, a requirement for a sudden brake or a rapid acceleration of the vehicle. The method may be for increasing driving awareness of a driver during an assisted drive of a vehicle or for reducing driver disengagement of a driver during the assisted drive of the vehicle. Driver disengagement may be also driver disengagement, especially when a driver is the driver of the vehicle (such as in non-fully autonomous drive). The term "driver disengagement" may define reduction or complete loss of active involvement of the driver or the driver in a driving task. For instance, the driver disengagement may refer to loss of attention as well as not being operationally involved in driving (e.g., hands off from steering wheel, and not providing steering input). On the other hand, the term "driving awareness" may define inactive involvement of the driver or the driver in a driving task, such as attention toward a drive direction without necessarily providing an operational input.

Increasing the driving awareness of a driver may mean that a level of awareness of the driver is increased so that the driver is made aware of the event and/or the driving condition. Accordingly, the driver may be kept in a condition where they are able to react to the event and/or the driving condition in a timely manner, especially when the assisted drive system may not be sufficient on its own.

The method comprises obtaining driving awareness data indicative of a degree of driving awareness of the driver during the assisted drive of the vehicle. The method provides first driver request data for requesting a first driver response from the driver after obtaining the driving awareness data. Especially, if the driving awareness data indicates a degree of driving awareness below a certain threshold, the method may provide first driver request data for requesting a first driver response from the driver. Accordingly, providing first driver request unnecessarily may be avoided. The first driver response is configured to increase the degree of driving awareness of the driver. For example, if the obtained driving awareness data is indicative of a first degree (normal) of driving awareness of the driver, providing the first driver request data may be configured to increase the degree of driving awareness of the driver to a second degree of driving awareness that is higher than the first degree of driving awareness.

The method provides further drive response data if the first driver response is not received within a first response time. By not obtaining the first driver response within the first response time, the obtained first degree of driving awareness may be kept at the same level without increasing the awareness level to the second degree. Accordingly, a driver disengagement may be determined.

The method provides drive response data, which is configured to autonomously alter at least one drive parameter of the assisted drive of the vehicle. Altering the at least one drive parameter may mean to deviate the drive parameter from an initial drive parameter during the first response time. For instance, the initial drive parameter may be a velocity at a speed limit on a driven road. Whereas, the altered drive parameter may be, for instance, 20% less than the speed limit on the driven road (20% less of the initial drive parameter). Alternatively, the initial drive parameter may be a steering torque feedback, and the altered drive parameter may deviate from the initial steering torque feedback, in that the altered drive parameter may be 10% lower steering torque feedback than the initial steering torque feedback.

The method may further provide second driver request data for requesting a second driver response from the driver after providing the drive response. The second driver response may be indicative of a re-establishment of the driving awareness of the driver. The second driver response may be configured to increase the degree of driving awareness of the driver. By increasing the degree of driving awareness, the method may provide a possibility to bring the altered drive parameter to an initial drive parameter during the first response time. Accordingly, a duration of the assisted drive with the altered drive parameter may be kept as short as possible. Thus, a safety of the driver may be ensured by bringing increasing the driving awareness of the driver in shorter time.

The above-mentioned method steps may be performed in a sequence as explained above.

The method may in particular be a computer implemented method. This means that at least one, multiple or all of the steps of the method may be carried out by a data processing system of the vehicle, which may comprise one or more computers or data processing apparatuses. Different steps may be carried out by the same or by different computers. A computer is herein understood as a data processing apparatus, which can carry out the steps as defined by the method.

According to an example, the at least one drive parameter may be an altered steering torque feedback on a steering device of the vehicle. The steering torque feedback may be provided by a steering torque feedback motor of a steer-by-wire system of the vehicle. In other words, the vehicle may comprise an electronic power steering system. The steering device may be a steering wheel of the vehicle. Steering torque feedback may mean a response of the steering device of the vehicle to a torque input of the driver. Accordingly, the steering torque feedback may be adjusted to give an unexpected steering feel of the steering device. Thus, altered steering torque feedback on the steering device may mean a lower or a higher torque response than a torque response of the steering device, to which the driver is accustomed or which they expect.

The method may thus comprise providing drive response data that is configured to autonomously alter the steering torque feedback on the steering device of the vehicle if the first driver response is not received within the first response time, and the method may further comprise providing the second driver request data as stated above. Alternatively, it may be provided that the method may, instead of providing the second driver request data for requesting a second driver response from the driver after providing the drive response, in particular directly, alter steering torque feedback on the steering device of the vehicle after providing drive response data when the first driver response is not received within the first response time.

According to an example, the altered steering torque feedback may be a reduced steering torque feedback compared to an initial steering torque feedback during the first response time. Accordingly, the steering device may provide a looser feeling in that a control of the steering device may feel lighter than during the first response time. Being used to the steering torque feedback during the first response time, the driver may realize the reduction in the steering torque. The driver may thereby be triggered to react, e.g., by having to steer more, which may increase the driving awareness. Thereby, the altered steering torque feedback of the assisted drive of the vehicle may increase the degree of driving awareness of the driver.

According to an example, the at least one drive parameter may be an altered lane positioning of the vehicle within a lane. The lane positioning of the vehicle within the lane may be pre-defined. The lane positioning may be a lateral positioning of the vehicle within the lane of the driven road. For instance, the lane positioning may be set to be at a center of the lane or at a defined distance from a boundary of a lane. The method may comprise partitioning the driven road into at least two corridors, and increasing a width of an inner corridor of the at least two corridors. By altering the lane positioning of the vehicle, the vehicle may shift sideways within the lane. This change of lane positioning within the lane may cause increasing the degree of driving awareness of the driver.

According to the invention, if the second driver response is not received within a second response time, the method further comprises:
- providing second drive response data, the second drive response data being configured to autonomously alter at least one further drive parameter of the assisted drive of the vehicle and/or to autonomously increase a degree of altering of the altered at least one drive parameter.

The further drive parameter, with the altered drive parameter, may cause an increased change feeling in the assisted drive. The altered further drive parameter may cause a change feeling that is more than altering the drive parameter and the further drive parameter individually. For instance, the altered drive parameter may be a steering torque feedback of the steering device while the further drive parameter may be throttle pedal feedback. Alternatively, or additionally, the degree of altering of the altered at least one drive parameter may be increased by altering the degree of the altered drive parameter, such as deviating the altered lane positioning further. The alteration may be increased in pre-determined time periods. Accordingly, the driving awareness, which may not have been increased during the second response time, may be increased.

According to an example, if the second driver response is received within the second response time, the method may comprise continuing the assisted drive of the vehicle without altering of the at least one drive parameter. Accordingly, after receiving the second driver response within the second response time, the at least one drive parameter may be set back to the initial drive parameter. The method may also comprise keeping the altered drive parameter for a further period of time after receiving the second driver response within the second response time (optionally, before setting the drive parameter back to the initial drive parameter).

According to an example, the second response time may be shorter than the first response time. For instance, the second response time may be half of the first response time. The drive parameter may be altered for a duration between an end of the first response time and a start of the second response time. By keeping the second response time shorter than the first response time, the assisted drive with the altered drive parameter may be kept at a minimum. Accordingly, a faster increase in driving awareness may be achieved.

According to an example, the first driver request data and/or the second driver request data may be configured for requesting a driver response in a form of a steering input on a steering device of the vehicle. This may be performed especially when hands of the driver are detected to be on the steering device of the vehicle (hands-on condition is fulfilled). Steering input may be a torque input from the driver to the steering device.

According to an example, the first driver request data and/or the second driver request data may be configured for requesting a driver response in a form of a visual response of the driver detected by a driver monitoring system of the vehicle. A visual response may be specified head or eye movements, hand gestures or facial expressions. The driver monitoring system may accordingly, comprise cameras (often infrared for low-light conditions), tracking sensors, facial recognition or gesture recognition sensors.

In a further example, the first driver request data and/or the second driver request data may be configured for requesting a driver response in a form of an operational response of the driver. For instance, the operational response may be pressing a brake or pressing the throttle pedal of the vehicle.

According to an example, the first driver request data and/or the second driver request data may be at least configured to display an information indicative of the requested driver response on a display of the vehicle. The information may be displayed at an infotainment system display, a digital instrument cluster or a head-up display of the vehicle.

According to an example, the driving awareness data may be obtained based on one or more of: a monitoring of the driver by the driver monitoring system of the vehicle, a steering input of the driver on the steering device of the vehicle, and/or a detection of driver hands on or off a steering device of the vehicle. For instance, an eyes-on-the-driven-road detected by the monitoring of the driver, an active steering input (a positive torque input to the steering device by the driver), and driver hands on or off the steering device may indicate a high level of driver driving awareness.

According to an example, each one of the first driver request data and the second driver request data may be configured for repeatedly requesting a driver response from the driver, wherein a requesting frequency and/or a requesting sensitivity depending on the driving awareness may be higher for the second driver request data than of for the first driver request data. The repeated request of the driver response may mean that the first driver request data or the second driver request may be provided in pre-determined time intervals, such as information indicative of the requested driver response may be displayed on a display of the vehicle every 2 seconds in case of the first driver request data, whereas the frequency in case of the second driver request data may be every second.

Obtaining driving awareness data indicative of the degree of driving awareness of the driver during the assisted drive of the vehicle may further comprise estimating driver awareness data indicative of a degree of driving awareness of the driver during the assisted drive of the vehicle. The method may proceed with the step of obtaining the driving awareness data if the estimated driver awareness data falls below a threshold value, indicating reduction of driving awareness in comparison to a pre-defined target awareness value. Accordingly, the method may only begin obtaining the driving awareness data upon detection of a reduced driver awareness.

According to a second aspect, there is provided a computer program product comprising instructions which, when executed by a data processing system, cause the data processing system to carry out the method of the first aspect of this disclosure.

The computer program product may be a computer program as such or a product such as a computer readable medium having stored the computer program thereon.

According to a third aspect, there is provided a data processing system comprising means for carrying out the method of the second aspect of this disclosure. The means may for example include the computer program product.

According to a fourth aspect, there is provided a vehicle comprising the data processing system of the third aspect.

The method may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the computer program product, the data processing system and the vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawing.
- Figure 1: shows a schematic illustration of a method for increasing driving awareness of a driver during an assisted drive of a vehicle;
- Figure 2: shows a schematic illustration of sequence of further method steps to the method of Fig. 1;
- Figure 3: shows a schematic illustration of a vehicle with vehicle components for carrying out the method of Fig. 1 and Fig. 2.

### DETAILED DESCRIPTION

The Figures are merely schematic representations and serve only to illustrate examples of the disclosure. Identical or equivalent elements are in principle provided with the same reference signs.

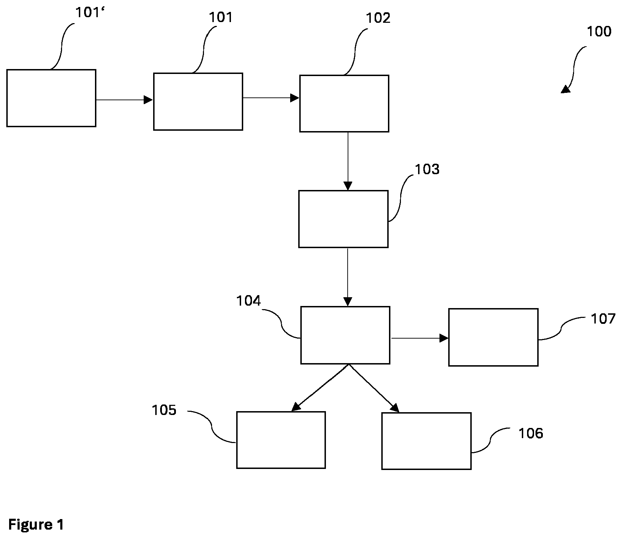

Figure 1 shows a schematic illustration of a method 100 for increasing driving awareness of a driver during an assisted drive of a vehicle 300. The method 100 comprises obtaining driving awareness data indicative of a degree of driving awareness of the driver during the assisted drive of the vehicle 101. The method may optionally comprise a step of estimating driving awareness data 101' for providing it to the next step 101 (obtaining driving awareness data). After obtaining the driving awareness data, the method comprises providing first driver request data for requesting a first driver response from the driver 102. The first driver response is configured to increase the degree of driving awareness of the driver. The method further comprises providing drive response data if the first driver response is not received within a first response time 103. The drive response data is configured to autonomously alter at least one drive parameter of the assisted drive of the vehicle 300.

Figure 1 shows that the method further comprises providing second driver request data for requesting a second driver response from the driver after providing the drive response 104. The second driver response is configured to increase the degree of driving awareness of the driver. The method, as shown in Figure 1, provides drive response data if the first driver response is not received within a first response time 105 or the method provides drive response data, which is configured to autonomously alter at least one drive parameter of the assisted drive of the vehicle 105. Alternative or in addition to the step 105, the method further comprises providing deactivation data for initiating a deactivation of the assisted drive 106.

After the step of providing the second driver request data 104, the method comprises keeping the obtained first degree of driving awareness at the same level without increasing the awareness level to the second degree, if the first driver response is not obtained within the first response time. If the first driver response is received within the first response time, the method comprises continuing the assisted drive of the vehicle 300 without altering of the at least one drive parameter 107. In other words, the drive parameter is not increased to a higher awareness level (for instance from the first degree of driving awareness to the higher second degree of driving awareness).

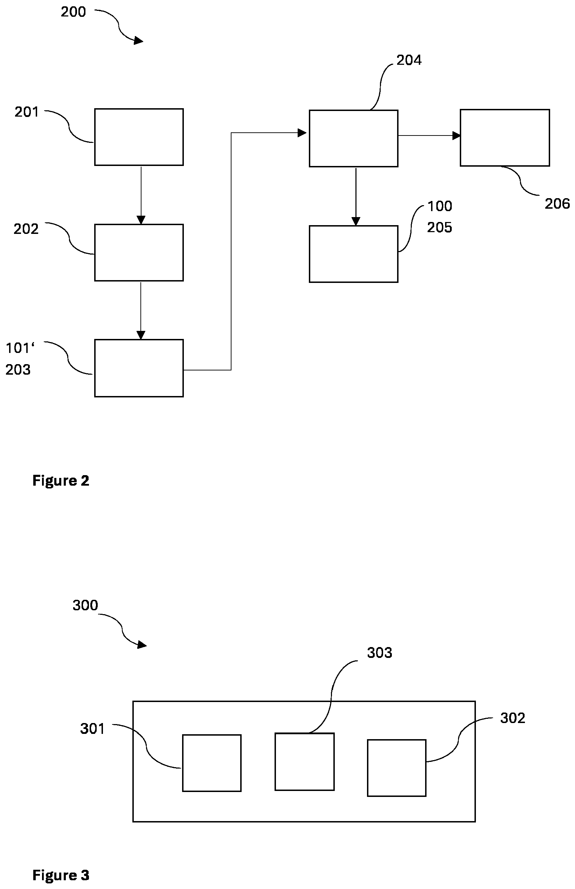

Figure 2 shows a schematic illustration of a sequence of further method steps 200 to the method 100 of Figure 1. The further method steps 200 can be executed before the method 100 of Figure 1. The further method steps 200 are configured for estimating driver awareness data indicative of a degree of driving awareness of the driver during the assisted drive of the vehicle 300. The further method steps 200 comprise setting an initial drive parameter 201. The initial drive parameter may be set with an expectation of a normal driving awareness of the driver (normal may indicate the first degree of driving awareness). The method further comprises obtaining sensor data for at least one driving parameter 202 from at least one measurement device 303 of the vehicle 300 (Fig. 3). Sensor data may comprise eye tracking data, steering torque data, lane positioning data, hands on or off position data. The sensor data may be used for estimating driving awareness data 101', 203. When the estimated driver awareness data exceeds a threshold value, the method may comprise keeping the set initial drive parameter unchanged 207. If the estimated driver awareness data falls below the threshold value, the method may proceed with the step of obtaining the driving awareness data 101 of the method 100, 205.

Figure 3 shows a schematic illustration of a vehicle 300 with vehicle components for carrying out the method of Fig. 1. The vehicle 300 comprises a data processing system 301 comprising means for carrying out the method 100 for increasing driving awareness of a driver during an assisted drive of the vehicle 300. The vehicle 300 further comprises a computer program product 302 comprising instructions which, when executed by the data processing system 301, cause the data processing system 301 to carry out the method 100 of any one of the previous claims.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100, 200: method
- 101', 101-106: method steps
- 201-206: further method steps
- 300: vehicle
- 301: data processing system
- 302: computer program product
- 303: measurement device

## Claims

1. A method (100) for increasing driving awareness of a driver during an assisted drive of a vehicle (300), the method (101) comprising:
- obtaining driving awareness data indicative of a degree of driving awareness of the driver during the assisted drive of the vehicle (101);
- providing first driver request data for requesting a first driver response from the driver after obtaining the driving awareness data, the first driver response being configured to increase the degree of driving awareness of the driver (102);
- providing drive response data if the first driver response is not received within a first response time, the drive response data being configured to autonomously alter at least one drive parameter of the assisted drive of the vehicle (103); and
- providing second driver request data for requesting a second driver response from the driver after providing a drive response, the second driver response being configured to increase the degree of driving awareness of the driver (104),
**characterized in that**,
if the second driver response is not received within a second response time, the method (100) further comprises:
- providing second drive response data, the second drive response data being configured to autonomously alter at least one further drive parameter of the assisted drive of the vehicle (300) and/or to autonomously increase a degree of altering of the altered at least one drive parameter (105).

2. The method (100) according to claim 1, wherein the at least one drive parameter is an altered steering torque feedback on a steering device of the vehicle (300), the steering torque feedback being provided by a steering torque feedback motor of a steer-by-wire system of the vehicle (300).

3. The method (100) according to claim 2, wherein the altered steering torque feedback is a reduced steering torque feedback compared to an initial steering torque feedback during the first response time.

4. The method (100) according to any one of the previous claims, wherein the at least one drive parameter is an altered lane positioning of the vehicle (300) within a lane.

5. The method (100) according to any one of claims 1 to 4, wherein, if the second driver response is received within the second response time, the method (100) comprises continuing the assisted drive of the vehicle (300) without altering of the at least one drive parameter (107).

6. The method (100) according to claim 1 or 5, wherein the second response time is shorter than the first response time.

7. The method (100) according to any one of the preceding claims, wherein the first driver request data and/or the second driver request data is configured for requesting a driver response in a form of a steering input on a steering device of the vehicle (300).

8. The method (100) according to any one of the preceding claims, wherein the first driver request data and/or the second driver request data is configured for requesting a driver response in a form of a visual response of the driver detected by a driver monitoring system of the vehicle (300).

9. The method (100) according to any one of the preceding claims, wherein the first driver request data and/or the second driver request data is at least configured to display an information indicative of the requested driver response on a display of the vehicle (300).

10. The method (100) according to any one of the preceding claims, wherein the driving awareness data is obtained based on one or more of: a monitoring of the driver by the driver monitoring system of the vehicle (300), a steering input of the driver on the steering device of the vehicle (300), and/or a detection of driver hands on or off a steering device of the vehicle (300).

11. The method (100) according to any one of the preceding claims, wherein each one of the first driver request data and the second driver request data are configured for repeatedly requesting a driver response from the driver, wherein a requesting frequency and/or a requesting sensitivity depending on the driver awareness is higher for the second driver request data than for the first driver request data.

12. A data processing system (301) comprising means for carrying out the method (100) of any one of claims 1 to 11.

13. A computer program product (302) comprising instructions which, when executed by a data processing system (301), cause the data processing system (301) to carry out the method (100) of any one of the claims 1 to 11.

14. A vehicle (300) comprising the data processing system (301) of claim 12.

## Patentansprüche

1. Verfahren (100) zum Erhöhen des Fahrbewusstseins eines Fahrers während einer unterstützten Fahrt eines Fahrzeugs (300), wobei das Verfahren (101) umfasst:
- Erhalten von Fahrbewusstseinsdaten, die einen Grad an Fahrbewusstsein des Fahrers während der unterstützten Fahrt des Fahrzeugs angeben (101);
- Bereitstellen erster Fahreranforderungsdaten zum Anfordern einer ersten Fahrerantwort vom Fahrer nach dem Erhalten der Fahrbewusstseinsdaten, wobei die erste Fahrerantwort dazu ausgelegt ist, den Grad des Fahrbewusstseins des Fahrers zu erhöhen (102);
- Bereitstellen von Fahrantwortdaten, wenn die erste Fahrerantwort nicht innerhalb einer ersten Antwortzeit empfangen wird, wobei die Fahrantwortdaten dazu ausgelegt sind, mindestens einen Fahrparameter des unterstützten Fahrens des Fahrzeugs autonom zu ändern (103); und
- Bereitstellen zweiter Fahreranforderungsdaten zum Anfordern einer zweiten Fahrerantwort vom Fahrer nach dem Bereitstellen einer Fahrantwort, wobei die zweite Fahrerantwort dazu ausgelegt ist, den Grad des Fahrbewusstseins des Fahrers zu erhöhen (104),
**dadurch gekennzeichnet, dass**
wenn die zweite Fahrerantwort nicht innerhalb einer zweiten Antwortzeit empfangen wird, das Verfahren (100) ferner umfasst:
- Bereitstellen zweiter Fahrantwortdaten, wobei die zweiten Fahrantwortdaten dazu ausgelegt sind, mindestens einen weiteren Fahrparameter des unterstützten Fahrens des Fahrzeugs (300) autonom zu ändern und/oder einen Änderungsgrad des geänderten mindestens einen Fahrparameters autonom zu erhöhen (105).

2. Verfahren (100) nach Anspruch 1, wobei der mindestens eine Fahrparameter eine geänderte Lenkdrehmomentrückmeldung an einer Lenkvorrichtung des Fahrzeugs (300) ist, wobei die Lenkdrehmomentrückmeldung durch einen Lenkdrehmomentrückmeldungsmotor eines Steer-by-Wire-Systems des Fahrzeugs (300) bereitgestellt wird.

3. Verfahren (100) nach Anspruch 2, wobei die geänderte Lenkdrehmomentrückmeldung eine reduzierte Lenkdrehmomentrückmeldung im Vergleich zu einer anfänglichen Lenkdrehmomentrückmeldung während der ersten Antwortzeit ist.

4. Verfahren (100) nach einem der vorhergehenden Ansprüche, wobei der mindestens eine Fahrparameter eine geänderte Fahrspurpositionierung des Fahrzeugs (300) innerhalb einer Fahrspur ist.

5. Verfahren (100) nach einem der Ansprüche 1 bis 4, wobei, wenn die zweite Fahrerantwort innerhalb der zweiten Antwortzeit empfangen wird, das Verfahren (100) ein Fortsetzen des unterstützten Fahrens des Fahrzeugs (300) ohne Ändern des mindestens einen Fahrparameters umfasst (107).

6. Verfahren (100) nach Anspruch 1 oder 5, wobei die zweite Antwortzeit kürzer als die erste Antwortzeit ist.

7. Verfahren (100) nach einem der vorhergehenden Ansprüche, wobei die ersten Fahreranforderungsdaten und/oder die zweiten Fahreranforderungsdaten zum Anfordern einer Fahrerantwort in Form einer Lenkeingabe an einer Lenkvorrichtung des Fahrzeugs (300) ausgelegt sind.

8. Verfahren (100) nach einem der vorhergehenden Ansprüche, wobei die ersten Fahreranforderungsdaten und/oder die zweiten Fahreranforderungsdaten dazu ausgelegt sind, eine Fahrerantwort in Form einer visuellen Antwort des Fahrers, die durch ein Fahrerüberwachungssystem des Fahrzeugs (300) detektiert wird, anzufordern.

9. Verfahren (100) nach einem der vorhergehenden Ansprüche, wobei die ersten Fahreranforderungsdaten und/oder die zweiten Fahreranforderungsdaten mindestens dazu ausgelegt sind, Informationen, die die angeforderte Fahrerantwort angeben, auf einer Anzeige des Fahrzeugs (300) anzuzeigen.

10. Verfahren (100) nach einem der vorhergehenden Ansprüche, wobei die Fahrbewusstseinsdaten basierend auf einem oder mehreren erhalten werden von: einem Überwachen des Fahrers durch das Fahrerüberwachungssystem des Fahrzeugs (300), einer Lenkeingabe des Fahrers an der Lenkvorrichtung des Fahrzeugs (300) und/oder einer Detektion, ob sich Fahrerhände, an einer Lenkvorrichtung des Fahrzeugs (300) befinden oder nicht.

11. Verfahren (100) nach einem der vorhergehenden Ansprüche, wobei sowohl die ersten Fahreranforderungsdaten als auch die zweiten Fahreranforderungsdaten zum wiederholten Anfordern einer Fahrerantwort vom Fahrer ausgelegt sind, wobei eine Anforderungsfrequenz und/oder eine Anforderungsempfindlichkeit in Abhängigkeit vom Fahrerbewusstsein für die zweiten Fahreranforderungsdaten höher als für die ersten Fahreranforderungsdaten ist.

12. Datenverarbeitungssystem (301), das Mittel zum Ausführen des Verfahrens (100) nach einem der Ansprüche 1 bis 11 umfasst.

13. Computerprogrammprodukt (302), das Anweisungen umfasst, die bei Ausführung durch ein Datenverarbeitungssystem (301) das Datenverarbeitungssystem (301) dazu veranlassen, das Verfahren (100) nach einem der Ansprüche 1 bis 11 auszuführen.

14. Fahrzeug (300), das das Datenverarbeitungssystem (301) nach Anspruch 12 umfasst.

## Revendications

1. Procédé (100) pour augmenter l'aptitude à la conduite d'un conducteur durant une conduite assistée d'un véhicule (300), le procédé (101) comprenant :
- l'obtention de données d'aptitude à la conduite indicatives d'un degré de l'aptitude à la conduite du conducteur durant la conduite assistée du véhicule (101) ;
- la fourniture de premières données de demande de conducteur pour demander une première réponse de conducteur auprès du conducteur après l'obtention des données d'aptitude à la conduite, la première réponse de conducteur étant configurée pour augmenter le degré de l'aptitude à la conduite du conducteur (102) ;
- la fourniture de données de réponse de conduite si la première réponse de conducteur n'est pas reçue dans les limites d'un premier temps de réponse, les données de réponse de conduite étant configurées pour modifier de façon autonome au moins un paramètre de conduite de la conduite assistée du véhicule (103) ; et
- la fourniture de secondes données de demande de conducteur pour demander une seconde réponse de conducteur auprès du conducteur après la fourniture d'une réponse de conduite, la seconde réponse de conducteur étant configurée pour augmenter le degré de l'aptitude à la conduite du conducteur (104),
**caractérisé en ce que**,
si la seconde réponse de conducteur n'est pas reçue dans les limites d'un second temps de réponse, le procédé (100) comprend en outre :
- la fourniture de secondes données de réponse de conduite, les secondes données de réponse de conduite étant configurées pour modifier de façon autonome au moins un paramètre de conduite supplémentaire de la conduite assistée du véhicule (300) et/ou pour augmenter de façon autonome un degré de modification de l'au moins un paramètre de conduite modifié (105).

2. Procédé (100) selon la revendication 1, dans lequel l'au moins un paramètre de conduite est une rétroaction de couple de braquage modifiée sur un dispositif de direction du véhicule (300), la rétroaction de couple de braquage étant fournie par un moteur à rétroaction de couple de braquage d'un système de direction à commande électrique du véhicule (300).

3. Procédé (100) selon la revendication 2, dans lequel la rétroaction de couple de braquage modifiée est une rétroaction de couple de braquage réduite par rapport à une rétroaction de couple de braquage initiale durant le premier temps de réponse.

4. Procédé (100) selon l'une quelconque des revendications précédentes, dans lequel l'au moins un paramètre de conduite est un positionnement de voie modifié du véhicule (300) à l'intérieur d'une voie.

5. Procédé (100) selon l'une quelconque des revendications 1 à 4, dans lequel, si la seconde réponse de conducteur est reçue dans les limites du second temps de réponse, le procédé (100) comprend la continuation de la conduite assistée du véhicule (300) sans modification de l'au moins un paramètre de conduite (107).

6. Procédé (100) selon la revendication 1 ou 5, dans lequel le second temps de réponse est plus court que le premier temps de réponse.

7. Procédé (100) selon l'une quelconque des revendications précédentes, dans lequel les premières données de demande de conducteur et/ou les secondes données de demande de conducteur sont configurées pour demander une réponse de conducteur sous une forme d'entrée de direction sur un dispositif de direction du véhicule (300).

8. Procédé (100) selon l'une quelconque des revendications précédentes, dans lequel les premières données de demande de conducteur et/ou les secondes données de demande de conducteur sont configurées pour demander une réponse de conducteur sous une forme d'une réponse visuelle du conducteur détectée par un système de surveillance de conducteur du véhicule (300).

9. Procédé (100) selon l'une quelconque des revendications précédentes, dans lequel les premières données de demande de conducteur et/ou les secondes données de demande de conducteur sont au moins configurées pour afficher une information indicative de la réponse de conducteur demandée sur une unité d'affichage du véhicule (300).

10. Procédé (100) selon l'une quelconque des revendications précédentes, dans lequel les données d'aptitude à la conduite sont obtenues sur la base d'un ou de plusieurs éléments parmi : une surveillance du conducteur par le système de surveillance de conducteur du véhicule (300), une entrée de direction du conducteur sur le dispositif de direction du véhicule (300), et/ou une détection de mains de conducteur placées sur un dispositif de direction du véhicule (300) ou enlevées de celui-ci.

11. Procédé (100) selon l'une quelconque des revendications précédentes, dans lequel chaque type de données parmi les premières données de demande de conducteur et les secondes données de demande de conducteur est configuré pour demander de façon répétée une réponse de conducteur auprès du conducteur, dans lequel une fréquence de demande et/ou une sensibilité de demande dépendant de l'aptitude du conducteur sont plus élevées pour les secondes données de demande de conducteur que pour les premières données de demande de conducteur.

12. Système de traitement de données (301) comprenant des moyens pour effectuer le procédé (100) de l'une quelconque des revendications 1 à 11.

13. Produit programme d'ordinateur (302) comprenant des instructions qui, lorsqu'elles sont exécutées par un système de traitement de données (301), amènent le système de traitement de données (301) à effectuer le procédé (100) de l'une quelconque des revendications 1 à 11.

14. Véhicule (300), comprenant le système de traitement de données (301) de la revendication 12.
